# EUROPÄISCHE PATENTANMELDUNG

(11) **EP 4 247 035 A1**
(43) Veröffentlichungstag der Anmeldung: **20.09.2023**
(21) Anmeldenummer: 22162752.4
(22) Anmeldetag: 17.03.2022
(51) Int. Cl.: H04W 12/082, H04W 12/48, H04L 9/40, H04W 4/70, H04W 12/30

(54) **VORRICHTUNG MIT EINEM MOBILFUNKMODUL UND EINEM IOT-GERÄT UND VERFAHREN ZUM BETRIEB DER VORRICHTUNG**

(71) Anmelder: Siemens Aktiengesellschaft, 80333 München (DE)
(72) Erfinder: Falk, Rainer, 85586 Poing (DE)
(74) Vertreter: Siemens Patent Attorneys

(57) **Zusammenfassung**

Bei der Vorrichtung mit einem Mobilfunkmodul (UE) und einem zur Nutzung eines Mobilfunknetzwerks mittels des Mobilfunkmoduls (EU) eingerichteten, insbesondere mit dem Mobilfunkmodul verbundenen, IoT-Gerät (ID), ist eine Berechtigung des IoT-Geräts zur Nutzung des Mobilfunkmoduls (UE) durch das IoT-Gerät abhängig von einer das IoT-Gerät (ID) identifizierenden Identifizierungsinformation eingerichtet.

## Beschreibung

Die Erfindung betrifft eine Vorrichtung mit einem Mobilfunkmodul und einem IoT-Gerät sowie ein Verfahren zum Betrieb der Vorrichtung zur Konfiguration einer Mobilfunkfähigkeit des IoT-Geräts.

Die von 3GPP spezifizierten 5G-Mobilfunkstandards unterstützen auch private 5G-Deplyoments, beispielsweise für private 5G-Netze in Fabrikhallen oder auf Werksgeländen. Solche privaten 5G-Netzwerkdeplyoments werden auch als "Stand-alone non-public network" (SNPN) oder "Public-network integrated non-public network" (PNI-NPN) bezeichnet. Die erste Bezeichnung findet dann Anwendung, wenn keine Integration der privaten 5G-Netze mit öffentlichen Mobilfunknetzen vorgesehen ist, die letzte Bezeichnung dann, wenn eine Integration vorgesehen ist.

Weiterhin ist es möglich, auf ein logisch separiertes Teilnetz (Network Slice oder ein privater Zugangspunkt APN) eines öffentlichen Mobilfunknetzes zuzugreifen.

Aus Sicht eines Mobilfunknetzes ist ein Teilnehmer durch ein Teilnehmeridentifikationsmodul, etwa eine SIM-Karte oder eine eSIM, und ggf. noch durch eine Kennung des Mobilfunkmoduls, bei 3GPP auch als "User Equipment" oder "Mobile Equipment" bezeichnet, identifiziert. Dabei enthält das Mobilfunkmodul das Teilnehmeridentifikationsmodul. Das Mobilfunkmodul ist beispielsweise ein 4G- und/oder 5G-Kommunikationsmodul und/oder ein Mobilfunk-Router und/oder ein Kommunikationsmodul.

Die Integration von IoT-Geräten wie insbesondere Automatisierungsgeräten in industrielle IoT-Netzwerke stellt an die IT-Sicherheit, insbesondere an die Funktions- und/oder Informationssicherheit, hohe Anforderungen, da Sicherheitslücken bei der Integration der IoT-Geräte weitreichende und dauerhaft bestehende Sicherheitseinbußen im Automatisierungsnetzwerk zur Folge haben können.

Vor diesem Hintergrund des Standes der Technik ist es daher Aufgabe der Erfindung, ein verbessertes Verfahren zum Betrieb einer Vorrichtung mit einem Mobilfunkmodul und einem IoT-Gerät anzugeben. Insbesondere soll das verbesserte Verfahren eine erhöhte IT-Sicherheit gewährleisten können und/oder eine hohe IT-Sicherheit unaufwändiger gewährleisten können. Ferner ist es Aufgabe der Erfindung, eine verbesserte Vorrichtung mit einem Mobilfunkmodul und einem IoT-Gerät anzugeben, mit welcher insbesondere eine erhöhte IT-Sicherheit und/oder eine hohe IT-Sicherheit unaufwändiger gewährleistet werden kann.

Diese Aufgabe der Erfindung wird mit einem System mit den in Anspruch 1 angegebenen Merkmalen sowie mit einem Verfahren mit den in Anspruch 12 angegebenen Merkmalen gelöst. Bevorzugte Weiterbildungen der Erfindung sind in den zugehörigen Unteransprüchen, der nachfolgenden Beschreibung und der Zeichnung angegeben.

Die erfindungsgemäße Vorrichtung weist ein Mobilfunkmodul und ein IoT-Gerät auf. Bei der erfindungsgemäßen Vorrichtung ist eine Berechtigung des IoT-Geräts zur Nutzung des Mobilfunkmoduls durch das IoT-Gerät zur Nutzung eines Mobilfunknetzwerks abhängig von einer das IoT-Gerät identifizierenden Identifizierungsinformation eingerichtet. Besonders bevorzugt ist die erfindungsgemäße Vorrichtung zur Prüfung der Berechtigung eingerichtet, vorzugsweise vor oder bei einer Nutzung des Mobilfunkmoduls durch das IoT-Gerät.

Bei der erfindungsgemäßen Vorrichtung ist das IoT-Gerät vorzugsweise mit dem Mobilfunkmodul verbunden und eingerichtet, um mittels des Mobilfunkmoduls ein Mobilfunknetzwerk zu nutzen, d. h. über das Mobilfunknetzwerk Daten zu übertragen, insbesondere von oder zu anderen IoT-Geräten oder von oder zu einem Cloud-basierten IoT-Dienst. Besonders bevorzugt ist die erfindungsgemäße Vorrichtung einstückig, d. h. einteilig, insbesondere einstückig, d. h. einteilig, handhabbar, ausgebildet. Das Mobilfunkmodul kann zweckmäßig in oder an das I-oT-Gerät fest integriert sein, oder als wechselbares internes oder als angestecktes oder ansteckbares oder als lösbar verbindendes oder verbindbares, separates Mobilfunkmodul ausgestaltet sein. Dabei bedeutet lösbar verbindbar, dass das Mobilfunkmodul mit dem IoT-Gerät zu einer einstückig handhabbaren Vorrichtung verbunden werden kann und vorzugsweise ist, wobei das Mobilfunkmodul und das IoT-Gerät voneinander ohne Zerstörung des IoT_Geräts und des Mobilfunkmoduls lösbar sind. Das Mobilfunkmodul weist vorzugsweise ein physikalisches oder virtualisiertes Teilnehmeridentifikationsmodul zur Authentisierung gegenüber dem Mobilfunknetzwerk auf. Es handelt sich dabei vorzugsweise um eine SIM-Karte (UICC, USIM) oder um ein EAP-Identity-Modul oder eine EAP-Identity-Funktion. Dieses umfasst vorzugsweise zumindest ein Netzwerkzugangsprofil und/oder ein zugeordnetes Teilnehmerprofil im Mobilfunknetzwerk ist dem durch das Teilnehmeridentifikationsmodul identifizierten Mobilfunkteilnehmer zugeordnet. Das IoT-Gerät selbst kann unabhängig von Mobilfunkmodul und dem Mobilfunknetzwerk die Datenübertragung kryptographisch schützen, z.B. mittels MACsec, IPsec oder TLS, DTLS oder mittels OPC UA. Welche Berechtigungen zur Nutzung des Mobilfunkmoduls zum Mobilfunk, d.h. welche Berechtigungen zur Nutzung von vom Mobilfunknetzwerk bereitgestellten Kommunikationsmöglichkeiten, die Vorrichtung erhält, hängt jedoch zusätzlich zu den dem Mobilfunkmodul oder dessen Teilnehmeridentifikationsmodul zugeordneten Berechtigungen auch von dem das Mobilfunkmodul für eine Datenübertragung mittels Mobilfunks nutzenden IoT-Gerät ab. Für das IoT-Gerät wird eine Kommunikationsmöglichkeit entsprechend der diesem IoT-Gerät zugeordneten Berechtigung bereitgestellt. Die Prüfung der Berechtigung und die Durchsetzung kann durch das Mobilfunkmodul selbst erfolgen. Dazu kann es eine Identifizierungsinformation des verbundenen IoT-Geräts ermitteln. Weiterhin ist es möglich, dass das Mobilfunkmodul eine Identifizierungsinformation des verbundenen IoT-Geräts oder eine daraus abgeleitete Geräteklassifizierungsinformation an das Mobilfunknetzwerk übermittelt, sodass das Mobilfunknetzwerk den dem IoT-Gerät zugeordneten Berechtigungen entsprechenden Kommunikationsdienste bereitstellen kann. Die Geräteklassifizierungsinformation kann z.B. unterscheiden, ob es sich um ein fest zugeordnetes IoT-Gerät ("trusted IoT device") handelt, um ein nicht fest zugeordnetes IoT-Gerät ("untrusted IoT device") oder um ein unbekanntes IoT-Gerät ("unknown IoT device"). Weiterhin kann die Geräteklassifizierungsinformation abhängig von einem Firmwarestand oder dem aktuellen Patch-Status des verbundenen IoT-Geräts abhängen.

Mittels der Erfindung kann auf dem Mobilfunkmodul und/oder einem mit dem Mobilfunkmodul verbundenen Teilnehmeridentifikationsmodul zweckmäßig ein Netzwerkzugangsprofil, insbesondere ein USIM-Profil oder ein EAP-Netzwerkzugangsprofil, gespeichert sein. Das Netzwerkzugangsprofil berechtigt das Mobilfunkmodul zweckmäßig zur Nutzung zum Mobilfunk, d. h. zum Zugang zu einem Mobilfunknetzwerk, und somit die Nutzung des Mobilfunks mittels des Mobilfunkmoduls. Das Mobilfunkmodul der erfindungsgemäßen Vorrichtung ist zweckmäßig ein Mobilfunk-Router und/oder ein Mobilfunk-Kommunikationsmodul. Das Mobilfunkmodul oder das Netzwerkzugangsprofil enthält bevorzugt eine das IoT-Gerätidentifizierende - und für das jeweilige IoT-Gerät vorzugsweise spezifische - Identifizierungsinformation, insbesondere eine Gerätekennung, des IoT-Geräts. Dadurch kann bei der Nutzung des Mobilfunkmoduls und/oder bei der Nutzung des Netzzugangsprofils geprüft werden, ob das Teilnehmeridentifikationsmodul tatsächlich von dem vorgesehenen IoT-Gerät verwendet wird. Weiterhin kann zusätzlich geprüft werden, ob ein vorgesehenes Mobilfunkmodul verwendet wird. Denn es weist etwa nur ein vorgesehenes Mobilfunkmodul die Identifizierungsinformation des IoT-Geräts auf oder nur ein vorgesehenes Mobilfunkmodul ist mit einem solchen Teilnehmeridentifikationsmodul verbunden, welches selbst ein auf ihm gespeichertes Netzwerkzugangsprofil die Identifizierungsinformation umfasst.

Erfindungsgemäß kann folglich vorteilhaft sichergestellt werden, dass ein Mobilfunkmodul und/oder ein Netzwerkzugangsprofil eines Mobilfunkmoduls tatsächlich von dem vorgesehenen industriellen IoT-Gerät verwendet wird.

Insbesondere kann ein Teilnehmeridentifikationsmodul oder ein darauf hinterlegtes Netzwerkzugangsprofil einem bestimmten IoT-Gerät oder einer bestimmten Gruppe von IoT-Geräten zugeordnet werden. Erfindungsgemäß kann somit zudem verhindert werden, dass ein IoT-Gerät ein Mobilfunkmodul und insbesondere ein Netzwerkzugangsprofil verwendet, welches nicht für die Benutzung durch dieses IoT-Gerät oder durch die bestimmte Gruppe von IoT-Geräten vorgesehen ist.

Das jeweilige Mobilfunknetzwerk kann ein privates Mobilfunknetzwerk, insbesondere ein 5G-Mobilfunknetzwerk, zweckmäßig ein SNPN-Netzwerk (SNPN (engl.) = *"stand-alone non public network")* oder ein PNI-NPN-Netzwerk (PNI-NPN (engl.) = *"public network integrated non public network")* oder ein Slice eines öffentlichen Mobilfunknetzes und/oder ein Mobilfunknetz mit einem bestimmten PDP-Datenpunkt (APN) sein oder umfassen. Das Netzwerkzugangsprofil wird vorzugsweise remote, d. h. via Fernzugriff, über ein Remote-Provisioning-System auf dem Teilnehmeridentifikationsmodul eingerichtet.

Die Prüfung, ob ein Teilnehmeridentifikationsmodul oder ein darauf hinterlegtes Netzwerkzugangsprofil tatsächlich von dem vorgesehenen IoT-Gerät verwendet werden darf, kann durch das IoT-Gerät selbst und/oder durch das Mobilfunkmodul der Vorrichtung, insbesondere ein Mobilfunk-Modem und/oder Mobilfunk-Kommunikationsmodul und/oder Mobilfunk-Router der Vorrichtung, oder durch das Teilnehmeridentifikationsmodul erfolgen. Es ist auch möglich, dass die Identifizierungsinformation zur Prüfung an ein Mobilfunknetzwerk oder an einen Kommunikationspartner zur Prüfung übermittelt wird, sodass diese überprüfen können, ob ein Teilnehmeridentifikationsmodul oder ein darauf hinterlegtes Netzwerkzugangsprofil tatsächlich von dem vorgesehenen IoT-Gerät verwendet wird. Abhängig davon kann die Nutzung von Diensten des Mobilfunknetzwerks freigegeben oder gesperrt werden, oder es kann die Datenübertragung oder der Zugriff auf Funktionen eines Kommunikationspartners beschränkt werden. Beispiele für Dienste des Mobilfunknetzwerks sind der Zugriff auf ein Network-Slice, die Nutzung eines URLLC (ultra-reliable low latency communication) Dienstes eines 5G-Mobilfunknetzwerks. Zweckmäßig ist die erfindungsgemäße Vorrichtung dazu ausgebildet, die Identifizierungsinformation zur Prüfung an das Mobilfunknetzwerk und/oder an den Kommunikationspartner zu übermitteln.

Bei der erfindungsgemäßen Vorrichtung ist die Identifizierungsinformation vorzugsweise eine Identitätskennung des IoT-Geräts oder die Identifizierungsinformation weist bevorzugt eine Identitätskennung des IoT-Geräts auf. Vorzugsweise wird das IoT-Gerät kryptographisch durch das Mobilfunkmodul authentisiert, um basierend auf der kryptographisch authentisierten Identität des das Mobilfunkmodul für eine Datenübertragung nutzenden IoT-Geräts die diesem IoT-Gerät zugeordneten Berechtigung zum Mobilfunk zu ermitteln.

Zweckmäßig ist in dieser Weiterbildung der Erfindung die Vorrichtung eingerichtet, die Identitätskennung des IoT-Geräts zu prüfen und dann, wenn die Identitätskennung des IoT-Geräts zulässig ist, also wenn die Identitätskennung dasjenige IoT-Gerät identifiziert, das Zugang zum Mobilfunknetzwerk erhalten soll, die Nutzung des Mobilfunkmoduls zum Mobilfunk zu berechtigen. Vorzugsweise weist die Vorrichtung eine Vergleichsinformation auf, wobei die Vorrichtung eingerichtet ist, die Identifizierungsinformation mit der Vergleichsinformation zu vergleichen. Ist die Identifizierungsinformation mit der Vergleichsinformation kompatibel, insbesondere gleich oder stimmt insbesondere ein Hashwert oder ein kryptographisch abgeleiteter Wert der Identifizierungsinformation mit der Vergleichsinformation oder einem Hashwert der Vergleichsinformation oder einem kryptographisch abgeleiteten Wert der Vergleichsinformation überein, so ist die Nutzung des Mobilfunkmoduls zum Mobilfunk zulässig. Anderenfalls ist die Nutzung unzulässig und wird bei der erfindungsgemäßen Vorrichtung vorzugsweise nicht zugelassen. Zweckmäßig ist die Identitätskennung eine Gerätekennung des IoT-Geräts.

Bei der erfindungsgemäßen Vorrichtung ist in einer bevorzugten Weiterbildung der Erfindung das IoT-Gerät und/oder ein mit dem Mobilfunkmodul signalverbundenes Teilnehmeridentifikationsmodul und/oder das Mobilfunkmodul zur Prüfung der Berechtigung zur Nutzung des Mobilfunkmoduls abhängig von der Identifizierungsinformation eingerichtet.

In dieser Weiterbildung kann vorteilhaft eine Prüfung der Berechtigung zur Nutzung, d. h. insbesondere eine Prüfung, ob die Identifizierungsinformation mit einer Vergleichsinformation wie oben beschrieben übereinstimmend ist, entweder direkt durch das IoT-Gerät erfolgen oder mittels des Teilnehmeridentifikationsmoduls erfolgen und/oder mittels des Mobilfunkmoduls erfolgen. Auf diese Weise kann die Prüfung der Berechtigung zur Nutzung aufgabenangepasst mit derjenigen technischen Komponente erfolgen, welche diese Aufgabe im jeweiligen industriellen Kontext am geeignetsten übernehmen kann.

Bevorzugt ist bei der erfindungsgemäßen Vorrichtung das IoT-Gerät ausgebildet, die Identifizierungsinformation in Gestalt insbesondere einer Gerätekennung oder einer von einer Gerätekennung abgeleiteten Gerätekennungsinformation vom Teilnehmeridentifikationsmodul auszulesen oder entgegenzunehmen und auf Übereinstimmung mit einer Gerätekennung des IoT-Geräts zu überprüfen. Bei Abweichung wird das Teilnehmeridentifikationsmodul und/oder das entsprechende Netzwerkzugangsprofil nicht verwendet, oder es wird ein eingeschränkter Gerätebetriebsmodus des Teilnehmeridentifikationsmoduls und/oder des Mobilfunkmoduls aktiviert. Ein solcher eingeschränkter Gerätebetriebsmodus des Teilnehmeridentifikationsmoduls oder des Mobilfunkmoduls gestattet vorzugsweise keinen regulären operativen Steuerungsbetrieb und/oder keinen Start oder Maschinenhochlauf des IoT-Geräts, insbesondere indem eine Kommunikation mit einem über das Mobilfunknetzwerk kommunikativ erreichbaren Steuerungssystems nicht ermöglicht wird.

Geeigneterweise ist bei der erfindungsgemäßen Vorrichtung alternativ oder zusätzlich das Mobilfunkmodul ausgebildet, die Identifizierungsinformation vom Teilnehmeridentifikationsmodul auszulesen und auf Übereinstimmung mit einer Gerätekennung des verbundenen IoT-Geräts zu prüfen. Bei Abweichung wird das Teilnehmeridentifikationsmodul und/oder das entsprechende Netzwerkzugangsprofil nicht oder nur in einem eingeschränkten Gerätebetriebsmodus verwendet. So kann etwa von dem Mobilfunkmodul ein Signal an das IoT-Gerät übermittelt werden, welches das IoT-Gerät veranlasst, einen eingeschränkten Betriebsmodus zu aktivieren.

In einer alternativen oder zusätzlichen Weiterbildung ist bei der erfindungsgemäßen Vorrichtung das Teilnehmeridentifikationsmodul ausgebildet, die Identifizierungsinformation desjenigen IoT-Geräts, das das Teilnehmeridentifikationsmodul verwendet, mit einer auf dem Teilnehmeridentifikationsmodul hinterlegten Gerätekennung zu vergleichen und die Nutzung des Teilnehmeridentifikationsmoduls bei einer Abweichung der Gerätekennung von der Identifizierungsinformation einzuschränken. Dabei kann das IoT-Gerät eingerichtet sein, sich gegenüber dem Teilnehmeridentifikationsmodul mittels eines kryptographischen Authentisierungsprotokolls zu authentisieren.

Weiterhin ist es möglich, dass auf einem Teilnehmeridentifikationsmodul mehrere Netzwerkzugangsprofile eingerichtet sind, die unterschiedlichen IoT-Geräten zugeordnet sind, d.h. unterschiedliche Gerätekennungen aufweisen. Es kann dann automatisch ein dem jeweiligen IoT-Gerät zugeordnetes, passendes, Netzwerkzugangsprofil automatisch ausgewählt und verwendet werden.

Es ist in einer Weiterbildung der erfindungsgemäßen Vorrichtung möglich, dass ein voreingestelltes Netzwerkzugangsprofil vorgesehen ist, das nicht einem speziellen IoT-Gerät zugeordnet ist. Dieses kann verwendet werden, wenn kein passendes, dem verbundenen IoT-Gerät zugeordnetes, Netzwerkzugangsprofil vorliegt. Weiterhin können das Teilnehmeridentifikationsmodul und/oder das Mobilfunkmodul eingerichtet sein, eine Meldung, die eine Identifizierungsinformation des verbundenen IoT-Geräts umfasst oder referenziert, insbesondere eine Lognachricht, eine Statusmeldung und/oder eine SMS-Nachricht, zu senden. Dadurch kann ein Betreiber des Mobilfunknetzwerks oder ein IoT-Netzwerk, in welches das IoT-Gerät eingebunden ist oder einzubinden ist, informiert werden, dass ein Teilnehmeridentifikationsmodul in einem IoT-Gerät verwendet wird, für das kein speziell zugeordnetes Netzwerkzugangsprofil vorliegt. Insbesondere kann eine Fern-Provisionierung initiiert werden, um ein zur Gerätekennung passendes Netzwerkzugangsprofil auf dem Teilnehmeridentifikationsmodul einzurichten. Zudem kann somit erkannt werden, wenn ein Teilnehmeridentifikationsmodul in ein anderes IoT-Gerät eingelegt wird.

Die Identifizierungsinformation in Gestalt einer Gerätekennung kann ein einzelnes IoT-Gerät oder eine Gruppe oder Klasse von IoT-Geräten identifizieren, insbesondere anhand einer Seriennummer, einer Herstellerkennung, einer Modellbezeichnung, anhand einer MAC-Adresse und/oder anhand eines kryptographischen Geräteschlüssels und/oder eines digitalen Gerätezertifikats, das den kryptographischen Geräteschlüssel wie etwa IDevID oder LDevID gemäß dem Standard IEEE 802.ar, oder einen TPM-Endorsement-Key umfasst oder referenziert oder einen davon abgeleiteten Wert, insbesondere einen kryptographischen Hash-Wert eines öffentlichen kryptographischen Geräteschlüssels des IoT-Geräts, umfasst. Die Berechtigungsinformation kann dem Teilnehmeridentifikationsmodul und/oder dem Mobilfunkmodul direkt übermittelt, d.h. übertragen, werden. Die Gerätekennung kann kryptographisch geschützt sein und eine kryptographische Geräteauthentisierung des IoT-Geräts gegenüber dem Teilnehmeridentifikationsmodul oder des IoT-Geräts gegenüber den Mobilfunkmodul ermöglichen. Weiterhin kann eine beim Teilnehmeridentifikationsmodul hinterlegte Identifizierungsinformation in Form der Gerätekennung kryptographisch geschützt vom IoT-Gerät ermittelbar sein, insbesondere mittels einer kryptographisch geschützten Datenverbindung zwischen IoT-Gerät und Teilnehmeridentifikationsmodul oder indem die Geräteinformation auf dem Teilnehmeridentifikationsmodul in einer auslesbaren, durch eine kryptographische Prüfsumme geschützten, Datenstruktur gespeichert ist.

Eine Prüfung der Berechtigung zur Nutzung des Mobilfunkmoduls abhängig von einer von dem IoT-Gerät abhängigen Identifizierungsinformation kann in einer Weiterbildung der Erfindung einmalig erfolgen, d.h. bei der erstmaligen Benutzung des Teilnehmeridentifikationsmoduls oder eines drauf hinterlegten Netzwerkzugangsprofils. In dieser Weiterbildung der Erfindung bleibt die Benutzung folglich dauerhaft freigeschaltet. Diese Weiterbildung hat den Vorteil, dass die Benutzung des Mobilfunkmoduls freigeschaltet bleibt, soweit sie etwa bei einer Inbetriebnahme es Industriegeräts zulässig gewesen ist. Ebenso ist jedoch möglich, dass die Überprüfung wiederholt erfolgt, insbesondere bei einem Gerätehochlauf oder Neustart oder Booten oder einem Power-Up des IoT-Geräts oder wiederholt im laufenden Betrieb, insbesondere nach eine gewissen Nutzungsdauer, etwa stündlich oder täglich, und/oder nach einer vorgebbaren Anzahl von Zugriffen und/oder Authentisierungsvorgängen.

Weiterhin ist es möglich, dass einen Teil einer Identifizierungsinformation nicht allein eine Gerätekennung, sondern zusätzlich ein Gerätebetriebsmodus des IoT-Geräts bildet. Dadurch lassen sich unterschiedliche Gerätebetriebsmodi bzw. Gerätelebenszyklusphasen oder Betriebsphasen, etwa eine Inbetriebnahme und/oder ein Onboarding und/oder eine Diagnose und/oder ein Service und/oder ein operativer Betrieb unterscheiden. Es kann in dieser Weiterbildung der Erfindung folglich ein zur aktuellem Gerätebetriebsmodus passendes Netzwerkzugangsprofil automatisch ausgewählt werden.

Weiterhin kann in dieser Weiterbildung der Erfindung wirksam verhindert werden, dass ein Netzwerkzugangsprofil, das für eine bestimmte Betriebsphase des IoT-Geräts vorgesehen ist, in einer anderen Betriebsphase verwendet wird.

Zweckmäßig ist bei der erfindungsgemäßen Vorrichtung das gegebenenfalls vorhandene Teilnehmeridentifikationsmodul insbesondere eine SIM-Karte (SIM = "Subscriber Identity Modul", insbesondere eine UICC mit einer USIM-Applikation), eine UICC, ein SSP-Modul (SSP = "Smart Secure Platform"), eine EIF (EAP Identity Function) oder ein EIM (EAP Identity Module). Zweckmäßig ist das Teilnehmeridentifikationsmodul in an sich bekannter Weise mit dem Mobilfunkmodul signalverbunden, insbesondere zum Datenaustausch signalverbunden.

Die Vorrichtung gemäß der Erfindung ist geeigneter Weise zur Beschränkung der Berechtigung des IoT-Geräts zur Nutzung des Mobilfunkmoduls und/oder eines oder des Teilnehmeridentifikationsmoduls des Mobilfunkmoduls abhängig von einer von dem IoT-Gerät abhängigen oder ausgehenden Beschränkungsinformation eingerichtet. Dabei kann unter einer von dem IoT-Gerät ausgehenden Beschränkungsinformation insbesondere eine von dem IoT-Gerät gesendete oder übermittelte Beschränkungsinformation zu verstehen sein.

Auf diese Weise kann ein Anwender des IoT-Geräts wirksam verhindern, dass ein Mobilfunk-Provisioning-System eine Berechtigung zur Nutzung des Teilnehmeridentifikationsmoduls oder des Mobilfunkmoduls ändert oder löscht. Folglich kann in dieser Weiterbildung der Erfindung ein Mobilfunk-Provisioning-System nur dann einen Zugriff auf das Teilnehmeridentifikationsmodul erlangen, wenn es aus Sicht des Anwenders des IoT-Geräts, etwa eines Betreibers eines IoT-Netzwerks, in welches das IoT-Gerät eingebunden oder einzubinden ist, erforderlich ist.

Vorzugsweise ist bei der erfindungsgemäßen Vorrichtung die Beschränkungsinformation eine Sperrinformation, mittels welcher die Berechtigung zur Nutzung aussetzbar und/oder unterbrechbar und/oder sperrbar ist.

Bevorzugt ist in dieser Weiterbildung der Erfindung die Berechtigung zur Nutzung eine Nutzung und/oder Änderung und/oder Löschung eines Netzzugangsprofils.

In dieser Weiterbildung der Erfindung kann, insbesondere durch den Anwender des IoT-Geräts, wirksam verhindert werden, dass etwa ein generisches, vorbereitetes, Netzzugangsprofil von einem Mobilfunkprovider geändert oder genutzt oder auf eine bestimmte Art genutzt wird. So können etwa vorbereitete Netzzugangsprofile vorgesehen sein, die nur in einem bestimmten privaten Mobilfunknetzwerk verwendet werden sollen. In dieser Weiterbildung der Erfindung kann also verhindert werden, dass eine Provisioning-Funktion durch einen weiteren, insbesondere öffentlichen, Betreiber des Mobilfunknetzwerks auf eine unvorhergesehene Art genutzt wird.

Bei der Vorrichtung gemäß der Erfindung hält das IoT-Gerät bevorzugt Änderungsvorgaben zur Änderung von Netzwerkzugangsprofilen für den Zugang zum Mobilfunk, d. h. zum Mobilfunknetzwerk, vor, welche insbesondere für Nutzer des IoT-Geräts auslesbar sind, und es ist eine Änderung der Netzwerkzugangsprofile, vorzugsweise mittels des IoT-Geräts und/oder eines Mobilfunknetzbetreibers und/oder eines Nutzers des IoT-Geräts, entsprechend der Änderungsvorgaben initiierbar.

In dieser Weiterbildung der Erfindung können die IoT-Geräte auch bei Anwendungen eingesetzt werden, in welchen mehrere Mobilfunkzugänge genutzt werden müssen. So können in Umgebungen, in denen IoT-Geräte sich in mehrere Mobilfunknetzwerke einwählen müssen, etwa in Industrieparks, welche von mehreren Anwendern oder Anwendergruppen oder Nutzern der IoT-Geräte, etwa unterschiedlichen Unternehmen, genutzt werden, verschiedene Netzwerkzugangsprofile vorgesehen sein, die der Vorrichtung zum Zugang zum Mobilfunk zur Verfügung stehen müssen. Mittels dieser Weiterbildung der Erfindung kann das IoT-Gerät Änderungsvorgaben vorhalten und das IoT-Gerät und/oder der Mobilfunknetzbetreiber können eine Änderung der Netzwerkzugangsprofile initiieren, sofern die Änderung der Netzwerkzugangsprofile den Änderungsvorgaben entspricht.

Die Netzwerkzugangsprofile werden typischerweise und vorzugsweise von Betreibern der Mobilfunknetze festgelegt, nicht aber von Anwendern oder Betreibern der IoT-Geräte. In dieser Weiterbildung der Erfindung können daher Anwender der IoT-Geräte sich zu einer Änderung der Netzwerkzugangsprofile entsprechend den Änderungsvorgaben entschließen und die Änderung des oder der der Netzwerkzugangsprofile entweder direkt beim Mobilfunknetzbetreiber, d. h. dem Betreiber des zum Mobilfunk dienenden Mobilfunknetzwerks, mittels einer Nachricht anfordern oder indirekt mittels des IoT-Geräts anfordern, wobei das IoT-Gerät als Mittler zwischen Mobilfunknetzwerk und Anwender des IoT-Geräts fungiert.

Mittels der vom IoT-Gerät vorgehaltenen Änderungsvorgaben lässt sich andererseits insbesondere sicherstellen, zu welchen Zeitpunkten die Betreiber der Mobilfunknetzwerke die Netzwerkzugangsprofile ändern dürfen. So können insbesondere in betriebskritischen Produktivphasen Änderungen der Netzwerkzugangsprofile seitens des Anwenders des IoT-Geräts unterbunden werden, sodass etwa Arbeits- oder Produktionsprozesse, in welchen das IoT-Gerät einsetzbar ist, nicht gestört oder unterbrochen werden müssen.

Eine solche Sperre kann etwa derart erfolgen, dass ein Anwender des IoT-Geräts einen vertrauenswürdigen Speicherbereich, vorzugsweise eine Trust-Anchor-Instanz, freigibt, in welchem Betreiber von Mobilfunknetzwerken Netzzugangsprofile speichern können. Der Anwender des IoT-Geräts, etwa ein Betreiber des industriellen IoT-Netzwerks, in welches das IoT-Gerät eingebunden oder einzubinden ist, kann den vertrauenswürdigen Speicherbereich bei Bedarf sperren oder nicht. Vorzugsweise können die Änderungsvorgaben Berechtigungsdaten in Form von Credentials enthalten, welche bei der Änderung von Netzwerkzugangsprofilen gemäß den Änderungsvorgaben geprüft werden. Auf diese Weise können Betreiber von Mobilfunknetzwerken leicht feststellen, dass die Änderungen den Änderungsvorgaben entsprechen und von einer berechtigten Stelle autorisiert sind. Besonders vorteilhaft sind die Berechtigungsdaten in dem vertrauenswürdigen Speicherbereich gespeichert.

Bei der erfindungsgemäßen Vorrichtung weist das Teilnehmeridentifikationsmodul bevorzugt eine Schnittstelle zum Empfang einer Netzwerkberechtigungsinformation zum Zugriff auf ein industrielles IoT-Netzwerk auf, wobei das Teilnehmeridentifikationsmodul zur Übermittlung der Netzwerkberechtigungsinformation an das IoT-Gerät ausgebildet und eingerichtet ist.

Auf diese Weise können Netzwerkberechtigungsinformationen, also Zugangscredentials, welche für den Zugang des IoT-Geräts in das industrielle IoT-Netzwerk erforderlich sind, einfach mittels der Schnittstelle des Teilnehmeridentifikationsmoduls an das Teilnehmeridentifikationsmodul übertragen werden. So können Netzwerkberechtigungsinformationen vorteilhaft durch einen Betreiber des Mobilfunknetzwerks an das Teilnehmeridentifikationsmodul übertragen werden. Ein solcher Mobilfunknetzwerk-Betreiber, etwa ein Mobilfunkanbieter, kann folglich sowohl Netzwerkzugangsprofile zum Zugang zum Mobilfunknetzwerk bereitstellen und gleichzeitig Netzwerkberechtigungsinformationen zum Zugang des industriellen IoT-Netzwerks bereitstellen. Es versteht sich, dass das industrielle IoT-Netzwerk insbesondere die IoT-Geräte selbst sowie den Datenaustausch zwischen den IoT-Geräten umfasst, während hingegen das Mobilfunknetzwerk allenfalls die Infrastruktur zur Kommunikation der IoT-Geräte untereinander bereitstellt. Es wird im Rahmen der vorliegenden Erfindung folglich zwischen Mobilfunknetzwerk und IoT-Netzwerk unterschieden. Auf diese Weise wird ein Onboarding von IoT-Geräten in IoT-Netzwerken besonders sicher hinsichtlich der IT-Sicherheit gestaltet, da für die Provisionierung der IoT-Geräte die bereits abgesicherte Umgebung des Mobilfunknetzwerks herangezogen und genutzt werden kann. Es kann also eine ohnehin vorhandene Security-Infrastruktur verwendet werden.

Grundsätzlich ist es erfindungsgemäß auch möglich, dass ein Teilnehmeridentifikationsmodul zum Empfang einer Netzwerkberechtigungsinformation zum Zugriff genutzt wird, welches aktuell überhaupt nicht zum Zugang zum Mobilfunk genutzt wird.

Die erhaltene Netzwerkberechtigungsinformation wird von dem Teilnehmeridentifikationsmodul an das IoT-Gerät übertragen. Zweckmäßig kann das Teilnehmeridentifikationsmodul die Netzwerkberechtigungsinformation mittels des Mobilfunkmoduls an das IoT-Gerät übertragen, d. h. das Mobilfunkmodul ist zweckmäßig für die Übermittlung der Netzwerkberechtigungsinformation an das IoT-Gerät ausgebildet. Geeigneterweise umfasst die Netzwerkberechtigungsinformation eine Authentisierungsinformation zur Authentisierung des Mobilfunkmoduls gegenüber dem IoT-Gerät. Das IoT-Gerät kann in dieser Weiterbildung der Erfindung folglich leicht prüfen, ob das Mobilfunkmodul überhaupt die für das IoT-Gerät tatsächlich vorgesehene Information bereitstellt, sodass das IoT-Gerät eine Übermittlung der Netzwerkberechtigungsinformation von unberechtigten Mobilfunkmodulen ablehnen kann.

Vorteilhaft kann ein Betreiber des IoT-Netzwerks, in welches das IoT-Gerät eingebunden ist oder einzubinden ist, leicht die zur Einbindung erforderlichen Informationen an einen Betreiber des Mobilfunknetzwerks übermitteln, sodass einen Auftrag zur Ausstattung des IoT-Geräts direkt durch den Betreiber des Mobilfunknetzwerks ausführbar ist.

Bei der Vorrichtung tritt gemäß einer bevorzugten Weiterbildung der Erfindung die Schnittstelle zum Empfang der Netzwerkberechtigungsinformation zusätzlich zu einer Schnittstelle zur Kommunikation mittels Mobilfunk hinzu. In einer bevorzugten Weiterbildung der Erfindung ist diese Schnittstelle eine weitere, zweite, Schnittstelle zur Kommunikation mittels Mobilfunks.

Bei der erfindungsgemäßen Vorrichtung ist die Schnittstelle zweckmäßig zum Empfang der Netzwerkberechtigungsinformation von einem Mobilfunkprovider, welcher das Teilnehmeridentifikationsmodul herausgibt, eingerichtet und ausgebildet. In dieser Weiterbildung der Erfindung können die Netzwerkberechtigungsinformationen von dem Mobilfunkprovider mittels welchem der Mobilfunk des Teilnehmeridentifikationsmoduls erfolgt, bereitgestellt werden.

Bei dem erfindungsgemäßen Verfahren zum Betrieb einer Vorrichtung mit einem Mobilfunkmodul und einem IoT-Gerät zwecks Konfiguration einer Mobilfunkfähigkeit des IoT-Geräts wird eine Nutzungsberechtigung eines Teilnehmeridentifikationsmoduls des Mobilfunkmoduls abhängig von einer von dem IoT-Gerät abhängigen Identifizierungsinformation eingerichtet.

Das erfindungsgemäße Verfahren lässt sich vorteilhaft mit der erfindungsgemäßen Vorrichtung wie vorhergehend beschrieben ausführen, wobei sich die Vorteile wie bereits zur erfindungsgemäßen Vorrichtung beschrieben ergeben.

Alternativ oder zusätzlich ist es mittels des erfindungsgemäßen Verfahrens möglich, nicht oder nicht allein mittels der erfindungsgemäßen Vorrichtung, sondern insbesondere mittels der Mobilfunkinfrastruktur des Mobilfunks zu prüfen, welches IoT-Gerät ein bestimmtes Teilnehmeridentifikationsmodul oder ein bestimmtes auf einem Teilnehmeridentifikationsmodul vorliegendes Netzwerkzugangsprofil verwendet. Dazu kann bei Nutzung einer mittels des Teilnehmeridentifikationsmoduls aufgebauten Mobilfunk-Netzwerkzugangs-Kommunikation für eine Authentisierung des IoT-Geräts, insbesondere mittels eines digitalen Gerätezertifikats wie etwa in den Protokollen TLS, HTTPS und/oder OPC UA vorgesehen, die Zuordnung überprüft werden.

Bei dem erfindungsgemäßen Verfahren kann bei einer erkannten Abweichung der Identifizierungsinformation eine Alarmmeldung, insbesondere eine Lognachricht, eine Statusmeldung und/oder eine SMS-Nachricht, gebildet werden. Dadurch kann ein Betreiber des Mobilfunknetzwerks oder eines IoT-Netzwerks, in welchem das IoT-Gerät eingebunden ist, informiert werden, dass ein Teilnehmeridentifikationsmodul in einem anderen als dem vorgesehenen IoT-Gerät verwendet wird. Insbesondere kann mittels einer solchen Alarmmeldung bei dem erfindungsgemäßen Verfahren eine Fern-Provisionierung initiiert werden, mittels welcher ein zur Gerätekennung des IoT-Geräts passendes Netzwerkzugangsprofil auf dem Teilnehmeridentifikationsmodul eingerichtet werden kann.

Bei dem erfindungsgemäßen Verfahren werden vorteilhaft der erfindungsgemäßen Vorrichtung entsprechende Vorteile erzielt, wie sie bereits oben erläutert sind.

Bei einer bevorzugten Weiterbildung des erfindungsgemäßen Verfahrens ist die Berechtigung zur Nutzung des Teilnehmeridentifikationsmoduls eine Berechtigung zum Netzzugang mittels des Teilnehmeridentifikationsmoduls.

Geeigneterweise und ebenfalls bevorzugt umfasst bei dem erfindungsgemäßen Verfahren die Identifizierungsinformation eine Kennung, d. h. eine Identitätskennung, des IoT-Geräts. Dabei ist oder umfasst die Identifizierungsinformation insbesondere eine kryptographisch geschützte Identitätskennung des IoT-Geräts und/oder eine signierte Identitätskennung. Auf diese Weise ist die Identifizierungsinformation besonders einfach gegenüber Manipulation geschützt.

Vorzugsweise wird das erfindungsgemäße Verfahren zum Betrieb eines erfindungsgemäßen Systems wie oben beschrieben durchgeführt.

Bevorzugt ist im Rahmen der vorliegenden Erfindung das Teilnehmeridentifikationsmodul eine SIM-Karte und/oder eine UICC-und/oder eine SSP- und/oder eine EIF- und/oder eine EIM-Komponente und/oder umfasst ein darauf oder darin gespeichertes Netzwerkzugangsprofil, vorzugswiese ein USIM-Profil und/oder ein EAP-Netzwerkzugangsprofil.

Zusätzlich kann vorgesehen sein, dass die Berechtigung zur Nutzung des Teilnehmeridentifikationsmoduls abhängig von einer Mobilfunkmodulinformation des Mobilfunkmoduls, insbesondere einer Gerätekennung des Mobilfunkmoduls, eingerichtet ist. In dieser Weiterbildung der Erfindung kann geprüft und folglich auch sichergestellt werden, ob das Teilnehmeridentifikationsmodul von einem vorgesehenen Mobilfunkmodul verwendet wird. Zweckmäßig wird bei dem erfindungsgemäßen Verfahren die Identifizierungsinformation und/oder die Mobilfunkmodulinformation von dem Teilnehmeridentifikationsmodul und/oder dem Mobilfunkmodul und/oder dem IoT-Gerät überprüft.

Nachfolgend wird die Erfindung anhand in der Zeichnung dargestellter Ausführungsbeispiele näher erläutert. Es zeigen:
- Fig. 1: ein drahtloses Automatisierungsnetzwerk mit mehreren Automatisierungsgeräten bei der Ausführung eines erfindungsgemäßen Verfahrens schematisch in einer Prinzipskizze,
- Fig. 2: Automatisierungsgeräte des Automatisierungsnetzwerks gemäß Fig. 1 bei der Ausführung des erfindungsgemäßen Verfahrens schematisch in einer Prinzipskizze sowie
- Fig. 3: vorteilhafte und zueinander alternative Ausführungen des erfindungsgemäßen Verfahrens mittels eines Teilnehmeridentifikationsmoduls und/oder mittels eines Mobilfunkmoduls und/oder mittels eines Auto-matisierungsgeräts gem. Fig. 2 und
- Fig. 4: ein weiteres Ausführungsbeispiel des erfindungsgemäßen Verfahrens

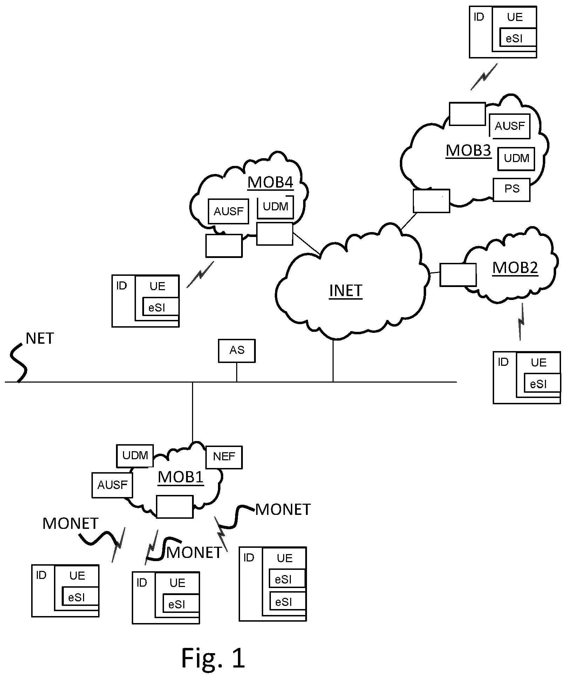

Das in Fig. 1 dargestellte Automatisierungsnetzwerk NET umfasst mehrere Automatisierungsgeräte ID in Form von Feldgeräten einer Fertigungsanlage. Beispielsweise sind die Feldgeräte zur Fertigung dienende Aktoren in Form von Werkzeugen sowie Sensoren in Form von Kameras, Wärmebildsensoren und akustischen Sensoren. Die Sensoren liefern Daten an ein Steuerungssystem des Automatisierungsnetzwerks, welches die Aktoren des Automatisierungssystems abhängig von Daten der Sensoren steuert. Dazu tauschen die Automatisierungsgeräte ID fortwährend Daten innerhalb des Automatisierungsnetzwerks NET aus.

Zum Austausch der Daten sind die Automatisierungsgeräte ID mittels Mobilfunknetzen MOB1, MOB2, MOB3, MOB4 in das Automatisierungsnetzwerk NET eingebunden, sodass die Automatisierungsgeräte ID Industrielle Internet-der-Dinge-Geräte oder IIoT-Geräte (IIoT = engl.: *"industrial internet of things")* bilden. Im dargestellten Ausführungsbeispiel bilden die Mobilfunknetze MOB1, MOB2, MOB3 private Mobilfunknetze, das Mobilfunknetz MOB4 hingegen ist ein öffentliches Mobilfunknetz.

In die Automatisierungsgeräte ID integriert oder an den Automatisierungsgeräten ID angebracht sind zur Bereitstellung einer Kommunikationsfähigkeit der Automatisierungsgeräte ID Mobilfunkmodule UE vorhanden, welche auf die Mobilfunknetze MOB1, MOB2, MOB3, MOB4 zugreifen können. Die Mobilfunkmodule UE weisen Teilnehmeridentifikationsmodule eSI auf, welche als SIM-Karte, als elektronische eSIM oder als UICC, SSP oder als EAP Identity Function EIF oder als EAP Identity Module EIM realisiert sind.

In den Teilnehmeridentifikationsmodulen eSI sind jeweils Netzwerkzugangsprofile P gespeichert. Allgemein können in einem Gerät mehrere Teilnehmeridentifikationsmodule eSI vorgesehen sein, welche sowohl physikalisch als auch logisch realisiert sein können.

Die Mobilfunkmodule UE mit den Teilnehmeridentifikationsmodulen eSI sind zum Mobilfunk nach dem 5G-Standard, d. h. dem Mobilfunkstandard der fünften Generation, ausgebildet.

Im dargestellten Ausführungsbeispiel wird ein Roaming zwischen den privaten Mobilfunknetzen MOB1, MOB2, MOB3 untereinander und zwischen diesen und dem öffentlichen Mobilfunknetz MOB4 nicht wie aus öffentlichen Mobilfunknetzen untereinander bekannt unterstützt. Daher müssen Netzwerkzugangsprofile P, welche vorzugsweise Berechtigungsinformationen in Form von kryptographischen Zugangscredentials für die Mobilfunknetze MOB1, MOB2, MOB3, MOB4 aufweisen, für eine Mehrzahl oder Vielzahl unterschiedlicher Mobilfunksysteme MOB1, MOB2, MOB3, MOB4 auf den Teilnehmeridentifikationsmodulen eSI der Automatisierungsgeräte ID eingerichtet werden.

Dazu werden für die Automatisierungsgeräte ID jeweils mindestens ein Mobilfunk-Netzwerkzugangsprofil P eingerichtet, welches jeweils spezifisch für ein privates MOB1, MOB2, MOB3 oder öffentliches MOB4 5G-Mobilfunknetz ist. Je nach Mobilfunknetz MOB1, MOB2, MOB3, MOB4 und unterstützter Protokollversion des Mobilfunknetzes MOB1, MOB2, MOB3, MOB4 müssen dabei unterschiedliche Zugangsprofile P eingerichtet werden. So kann bei einem Mobilfunknetz MOB1, MOB2, MOB3, MOB4 mit einer bestimmten Protokollversion eine Netzwerkzugangs-Authentisierung durch die jeweiligen Authentisierungsmodule AUSF, UDM erfolgen, wogegen bei anderen Protokollversionen ein Authentisierungsserver AS des Automatisierungsnetzwerks NET, der auch für einen Wi-Fi-Zugang nutzbar ist, mitverwendet werden kann. Unterschiedliche private Mobilfunknetze MOB1, MOB2, MOB3 unterstützten dabei unterschiedliche Authentisierungsverfahren (z.B. 5G-AKA, EAP-AKA', EAP-TLS), EAP-MSChapv2), sodass je Automatisierungsgerät ID im dargestellten Ausführungsbeispiel zweckmäßig eine Mehrzahl oder Vielzahl unterschiedlicher Netzwerkzugangsprofile P eingerichtet ist.

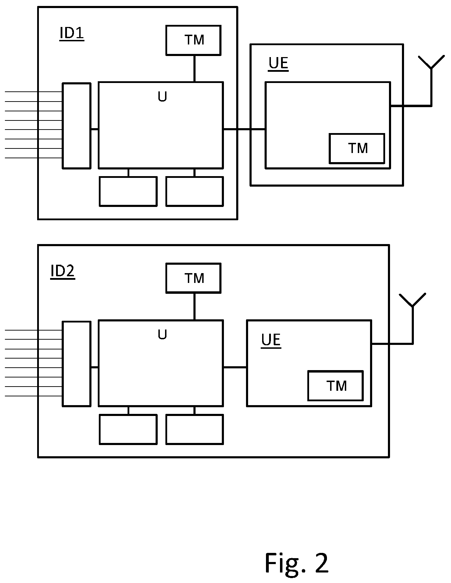

Wie in Fig. 2 dargestellt können Automatisierungsgeräte ID wie das abgebildete Automatisierungsgerät ID1 mit einem integrierten Mobilfunkmodul UE ausgestattet sein oder wie das abgebildete Automatisierungsgerät ID2 mit einem externen Mobilfunkmodul UE verbunden werden. Die Teilnehmeridentifikationsmodule TM, in Fig. 1 als eSI bezeichnet, sind beispielsweise jeweils im Kommunikationsmodul UE oder im "eigentlichen" Automatisierungsgerät ID realisiert. Die Teilnehmeridentifikationsmoduls TM sind wie bereits zuvor erläutert in sich bekannter Weise als SIM oder als eSIM oder als UICC oder als SSP oder als EIF (EIF = engl.: *"EAP Identity Function")* oder als EIM (EIM = engl.: *"EAP Identity Module")* oder als GTA (GTA = engl.: *"Generic Trust Anchor")* realisiert.

Die Automatisierungsgeräte ID sind im dargestellten Ausführungsbeispiel identifizierbar. Dazu ist im dargestellten Ausführungsbeispiel bei den Automatisierungsgeräten ID jeweils eine Gerätekennung in einem Flash-Speicher des Automatisierungsgeräts ID hinterlegt. Die Gerätekennung ist im dargestellten Ausführungsbeispiel eine vom Gerätehersteller vergebene Seriennummer oder eine MAC-Adresse oder eine CPU-Kennung oder eine Speichermodul-Kennung oder ein digitales Gerätezertifikat, insbesondere ein TCG DICE-basiertes Gerätezertifikat oder ein TPM-Endorsement-Key.

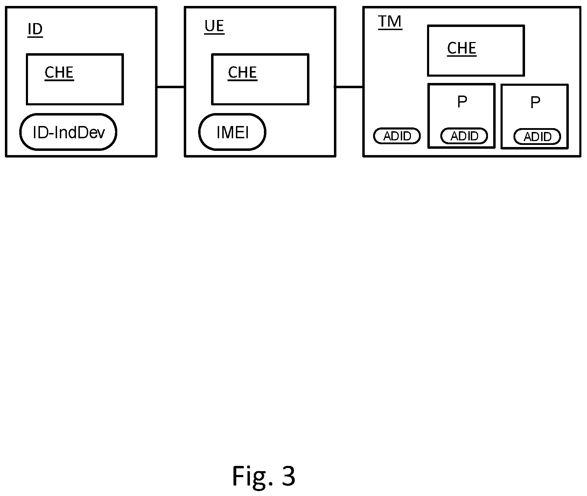

Fig. 3 zeigt beispielhaft mehrere Möglichkeiten, mittels des erfindungsgemäßen Verfahrens ein Teilnehmeridentifikationsmodul TM einer Gerätekennung des Automatisierungsgeräts ID zuzuordnen: dabei lässt sich das erfindungsgemäße Verfahren auf einer Steuereinheit der jeweiligen Automatisierungsgeräte ID ausführen, beispielsweise auf der Main CPU des Automatisierungsgeräts ID, durch ein Mobilfunkmodul UE, oder auf einem Teilnehmeridentifikationsmodul eSI.

Das Teilnehmeridentifikationsmodul TM, in Fig. 1 als eSI bezeichnet, enthält wie in Fig. 3 dargestellt zwei Netzwerkzugangsprofile P. Weiterhin ist eine Information ADID zu zulässigen Geräten vorgesehen. Diese Information ADID kann für das Teilnehmeridentifikationsmodul TM als Ganzes gelten oder aber alternativ spezifisch für ein einzelnes Netzwerkzugangsprofil P des Teilnehmeridentifikationsmoduls.

Die Automatisierungsgeräte ID enthalten wie in Fig. 3 dargestellt eine Gerätekennung ID-IndDev, mittels welcher die Automatisierungsgeräte ID eindeutig identifizierbar sind.

Die Gerätekennung ID-IndDev wird mittels eines Prüfschritts CHE einer Prüfung unterzogen. Bei dieser Prüfung wird die Nutzung des Teilnehmeridentifikationsmoduls TM oder gegebenenfalls eines bestimmten Netzwerkzugangsprofils P für eine Netzwerkzugangs-Authentisierung zu einem Mobilfunknetz MOB1, MOB2, MOB3, MOB4 nur dann zugelassen, wenn die tatsächliche Gerätekennung ID-IndDev in der relevanten Information ADID zu zulässigen Geräten enthalten ist. Zusätzlich kann auch eine Mobilfunkmodulkennung IMEI des Mobilfunkmoduls UE in die Überprüfung einbezogen werden, sodass die Nutzung eines Teilnehmeridentifikationsmoduls TM oder des Netzwerkzugangsprofils P sowohl von der Kombination aus der Gerätekennung ID-IndDev des Automatisierungsgeräts ID und der Mobilfunkmodulkennung IMEI des Mobilfunkgeräts UE abhängt, etwa dergestalt, dass geprüft wird, ob die Information ADID zu zulässigen Geräten sowohl die Gerätekennung ID-IndDev des Automatisierungsgeräts ID als auch die Mobilfunkmodulkennung IMEI des Mobilfunkgeräts UE enthält. Wird dies durch das Ergebnis der Prüfung verneint, so wird die Nutzung des Teilnehmeridentifikationsmoduls TM nicht zugelassen.

Grundsätzlich kann der Prüfschritt CHE entweder durch das Mobilfunkgerät UE oder durch das Automatisierungsgerät ID oder durch das Teilnehmeridentifikationsmodul TM durchgeführt werden. Dabei muss der Prüfschritt CHE nicht exklusiv durch eine der vorgenannten Komponenten durchgeführt werden, sondern der Prüfung kann auch durch zwei oder durch sämtliche der vorgenannten Komponenten durchgeführt werden.

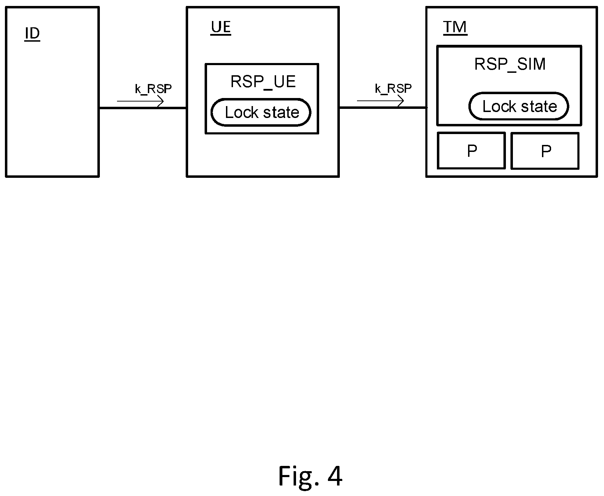

In einem weiteren in Fig. 4 dargestellten Ausführungsbeispiel, welches im Übrigen dem zuvor beschriebenen Ausführungsbeispiel entspricht, ist ein Remote-SIM-Provisioning-Server eingerichtet, ein Netzwerkzugangsprofil P auf einem Mobilfunkmodul UE, welches an einem Automatisierungsgerät ID angeordnet ist, einzurichten und zu aktualisieren.

Im in Fig. 4 dargestellten Ausführungsbeispiel ist das Automatisierungsgerät ID eingerichtet, einen Remote-Zugriff eines Remote-SIM-Provisioning-Servers auf das Teilnehmeridentifizierungsmodul TM zu sperren. Dazu kann das Automatisierungsgerät ID beispielsweise über eine nur lokal zugängliche AT-Kommandoschnittstelle einen entsprechenden Sperrbefehl k_RSP an das Mobilfunkmodul UE übertragen. Die Sperrfunktionalität kann durch das Mobilfunkmodul UE realisiert sein, sodass über eine Mobilfunkschnittstelle des Mobilfunkmoduls UE der Mobilfunkprovider keinen Zugriff auf das Teilnehmeridentifikationsmodul TM hat. Es ist jedoch alternativ auch möglich, einen Sperrbefehl k RSP direkt an das Teilnehmeridentifikationsmodul TM zu übertragen, sodass das Teilnehmeridentifikationsmodul TM den Zugriff auf eine auf ihr realisierte Provisionierungs-Funktionalität zur Einrichtung oder Änderung von Netzwerkzugangsprofilen P sperrt oder einschränkt.

Im Ausführungsbeispiel gemäß Fig. 4 sperrt das Automatisierungsgerät ID über ein Sperr-Kommando k_RSP eine Remote-SIM Provisioning-Funktionalität RSP_UE auf einem Mobilfunkmodul UE und/oder eine Remote-SIM-Provisioning-Funktionalität RSP_SIM auf einem Teilnehmeridentifikationsmodul TM. Unter einer Remote-SIM-Provisioning-Funktionalität ist eine Funktionalität des Mobilfunkmoduls UE und/oder des Teilnehmeridentifikationsmoduls TM zu verstehen, mittels welcher eine Netzzugangskonfiguration des Teilnehmeridentifikationsmoduls des Mobilfunkmoduls UE für einen Netzzugang in das Mobilfunknetz MOB1, MOB2, MOB3, MOB4 an das Teilnehmeridentifikationsmodul TM oder das Mobilfunkmodul UE übermittelt werden kann. Mittels dieser in Fig. 4 gezeigten Weiterbildung der Erfindung kann das Automatisierungsgerät ID einen Zugriff eines Mobilfunkproviders auf das Teilnehmeridentifikationsmodul TM über eine Remote-SIM-Provisioning-Funktionalität RSP_UE auf dem Mobilfunkmodul UE und/oder Remote-SIM-Provisioning-Funktionalität RSP_SIM auf dem Teilnehmeridentifikationsmodul TM dauerhaft oder temporär verhindern. Auf eine entsprechende Weise kann das Automatisierungsgerät ID einen Zugriff eines Mobilfunkproviders auf das Teilnehmeridentifikationsmodul TM in einem weiteren, nicht eigens gezeigten Ausführungsbeispiel zulassen.

Bei dem in Fig. 4 gezeigten Ausführungsbeispiel lässt sich das Automatisierungsgerät ID optional mittels einer nur lokal zugänglichen AT-Kommandoschnittstelle entsperren, wobei zusätzlich eine Entsperrinformation in Gestalt eines Entsperrcodes oder Entsperrschlüssels erforderlich sein kann und/oder eine Authentisierung mittels einer Berechtigungsinformation, etwa ein Zertifikat oder eine digitale Signatur, erforderlich sein kann.

Nach der Entsperrung kann ein Remote-Zugriff auf das Teilnehmeridentifikationsmodul TM erfolgen und ein Netzwerkzugangsprofil P neu konfiguriert werden.

Optional können auf den Automatisierungsgeräten ID mehrere unterschiedliche Netzwerkzugangsprofile P vorgesehen sein. Denn die mit 5G-Mobilfunk ermöglichten unterschiedlichen Deployments von Mobilfunknetzwerken MOB1, MOB2, MOB3, MOB4 werden dazu führen, dass ein globales Roaming wie in öffentlichen Mobilfunknetzen üblich im industriellen Umfeld nicht unterstützt werden wird. Daher müssen Netzwerkszugangsprofile P, und insbesondere kryptographische Zugangscredentials, für eine Mehrzahl oder Vielzahl unterschiedlicher Mobilfunknetze MOB1, MOB2, MOB3, MOB4 auf den Automatisierungsgeräten ID eingerichtet werden. Dies erfolgt durch ein Device-Management-System. Dieses Device-Management-System kann jedoch nicht wie bei herkömmlichen Firmennetzwerken üblich mittels eines Betreibers des Automatisierungsnetzwerks NET die entsprechenden Einstellungen direkt auf den Industriegeräten ID einspielen. Vielmehr wird das Device-Management-System dies häufig nur indirekt unter Nutzung von Schnittstellen der unterschiedlichen Mobilfunksysteme MOB1, MOB2, MOB3, MOB4 veranlassen können. Diese Schnittstellen können allgemein als API, im vorliegenden Kontext jedoch auch als Network Exposure Function (NEF), bezeichnet werden. Über solche Network Exposure Functions NEF bieten die Mobilfunknetzwerke MOB1, MOB2, MOB3, MOB4 eine Schnittstelle an, um auf das entsprechende Mobilfunknetzwerk MOB1, MOB2, MOB3, MOB4 über jeweils eine definierte Schnittstelle zugreifen zu können.

Eingerichtet werden separate Netzwerkzugangsprofile P beispielsweise spezifisch für die unterschiedlichen privaten Mobilfunknetzwerke MOB1, MOB2, MOB3, MOB4. Je nach Mobilfunknetzwerk und unterstützter 5G-Version werden dabei unterschiedliche Netzwerkzugangsprofile P eingerichtet. Bei einer bestimmten 5G-Version kann die Konfiguration des jeweiligen Netzwerkzugangsprofils P beispielsweise derart erfolgen, dass eine Netzwerkzugangsauthentisierung durch eine gesonderte Infrastruktur erfolgt, wogegen bei einer anderen 5G-Version ein Enterprise-Authentisierungsserver, der auch für einen Wi-Fi-Zugang nutzbar ist, mitverwendet werden kann. Unterschiedliche private Mobilfunknetzwerke MOB1, MOB2, MOB3, MOB4 unterstützen im gezeigten Ausführungsbeispiel voraussichtlich unterschiedliche Authentisierungsverfahren, beispielsweise 5G-AKA, EAP-AKA', EAP-TLS, EAP-TTLS, PEAP und EAP-MSChapv2, welche mittels der mehreren unterschiedlichen Netzwerkzugangsprofile P nutzbar sind.

Das Device-Management-System enthält dazu *"Delegated Management Engines",* die die entsprechenden externen APIs oder NEFs ansprechen können. Darüber kann das Enterprise Device-Management-System dafür sorgen, dass die benötigten Netzwerkzugangsprofile P auf den von ihm verwalteten Automatisierungsgeräten ID eingerichtet werden, obwohl es selbst dies nicht durchführen kann.

Das Enterprise-Device-Management-System verwaltet für ein verwaltetes Automatisierungsgerät jeweils einen Gerätekonfiguration, beispielsweise umfassend eine Ist-Konfiguration und eine Soll-Konfiguration. Eine solche Gerätekonfiguration umfasst Einträge zu mehreren vorhandenen oder einzurichtenden Netzwerkzugangsprofilen P des jeweiligen Automatisierungsgeräts ID. Diesen zugeordnet ist eine Information, auf welchem Weg, d. h. über welches Mobilfunk-Provisioning-System, das entsprechende Netzwerkzugangsprofil P eingerichtet werden kann. Ein Automatisierungsgerät ID kann dabei mehrere Teilnehmeridentifikationsmodule eSIM mit jeweils zumindest einem oder mehreren Netzwerkzugangsprofilen P umfassen. Die Gerätekonfiguration enthält dabei eine Information, auf welchem Teilnehmeridentifikationsmodul TM bzw. in welchem Eintrag auf einem Teilnehmeridentifikationsmodul TM das entsprechende Netzwerkzugangsprofil P auf dem Automatisierungsgerät ID hinterlegt ist. Dadurch kann erreicht werden, dass ein Netzwerkzugangsprofil P auf der vorgesehenen Teilnehmeridentifikationsmodul TM und auf diesem im vorgesehenen Teilnehmeridentifikationsmodul und Eintrag eingerichtet ist.

Falls eine Soll-Konfiguration eines Automatisierungsgeräts ID von der aktuellen Ist-Konfiguration abweicht, übermittelt das Device-Management-System eine Provisioning/Configuration-Request-Nachricht an das jeweilige Mobilfunk-Provisioning-System oder an das verwaltete Automatisierungsgerät ID, damit dieses oder ein darauf vorhandener Device Management Agent die entsprechende Provisionierung beim jeweiligen Mobilfunk-Provisioning-System anstößt. Dazu wird eine Anforderungsnachricht vom Device-Management-System an eine Schnittstelle des Mobilfunknetzwerks MOB1, MOB2, MOB3, MOB4 eines privaten 5G-Mobilfunknetzes übermittelt. Dies führt dazu, dass ein Provisionierdienst dieses privaten Mobilfunknetzwerks MOB1, MOB2, MOB3, MOB4, soweit zulässig, auf dem angegebenen Automatisierungsgerät ID ein entsprechendes Zugangsprofil mit dazugehörigen Zugangscredentials einrichtet.

Nicht eigens in der Zeichnung dargestellt können Betreiber des Mobilfunknetzes nicht allein eine Provisionierung der Netzwerkzugangsprofile P übernehmen, sondern die Betreiber des Mobilfunknetzwerks MOB1, MOB2, MOB3, MOB4 können zugleich Identifizierungsinformationen zum Zugang zum Automatisierungsnetzerk NET übermitteln. Dazu können solche Identifizierungsinformationen entweder direkt übermittelt werden oder mittels eines Verweises, beispielsweise eines Links, etwa eines seitens des Betreibers des Mobilfunknetzwerks MOB1, MOB2, MOB3, MOB4 kryptographisch geschützten, etwa signierten und/oder verschlüsselten, Links.

Bei dem derart in die Mobilfunknetzwerke MOB1, MOB2, MOB3, MOB4 vernetzten Automatisierungsgerät ID werden zusätzlich auch mittels der Mobilfunknetzwerke MOB1, MOB2, MOB3, MOB4 Anlagen-Credentials für "eigentliche" Automatisierungsgerät ID selbst eingerichtet, damit das Automatisierungsgerät ID mittels OPC UA und/oder einer Cloud-Anbindung im Automatisierungsnetzwerk NET einer Automatisierungsanlage, etwa einer Fertigungsanlage, sicher kommunizieren kann. Die Anlagen-Credentials ermöglichen eine End-zu-End-Sicherheit der Kommunikation des Automatisierungsgeräts ID oder eine zusätzliche Sicherungsschicht zu anderen Automatisierungsgeräten ID oder Automatisierungsfunktionen, beispielsweise unter Nutzung von TLS, QUIC, IPsec, MACsec, OPC UA Security.

Dazu können Anwender des Automatisierungsgeräts ID über ein Customer-Care-Portal des Mobilfunkanbieters MOB1, MOB2, MOB3, MOB4 in Teilnehmeridentifikationsmodulen TM für die Mobilfunkmodule UE der Automatisierungsgeräte ID jeweils einen Konfigurationsdatensatz in Gestalt eines sogenannten Config-Blobs einstellen, der über das Mobilfunkmodul UE an das Teilnehmeridentifikationsmodul TM übertragen und auf diesem gespeichert wird, und der über das Mobilfunkmodul UE von dem damit verbundenen Automatisierungsgerät ID auslesbar ist. Das zunächst unkonfigurierte Automatisierungsgerät ID kann diesen Konfigurationsdatensatz vom verbundenen Mobilfunkmodul UE auslesen und diesen Konfigurationsdatensatz direkt als Gerätekonfiguration aktivieren. Diese Gerätekonfiguration steht nun entweder direkt für eine reguläre operative Nutzung des Automatisierungsgeräts ID oder aber als Vertrauensbasis zur Durchführung eines nachfolgenden Onboarding- oder Provisioning-Prozesses des Automatisierungsgeräts ID in dem Automatisierungsnetzwerk NET der Anlage zur Verfügung.

Die ohnehin vorhandene Security-Infrastruktur und die vorhandenen Sicherheitssysteme des Mobilfunkproviders MOB1, MOB2, MOB3, MOB4 können somit mitverwendet werden, um eine geschützte Provisionierung von Anlagen-Credentials von Automatisierungsgeräten ID, welche im Übrigen unter der Kontrolle des Betreibers der Anlage, d. h. des OT-Anwenders, liegen, durchzuführen. Dazu wird also zum einen der geschützte Zugriff des OT-Anwenders auf ein Customer-Care-Portal des Mobilfunkproviders MOB1, MOB2, MOB3, MOB4 verwendet sowie zum anderen das geschützte Remote-SIM-Management des Mobilfunkproviders verwendet. Eine solche Lösung ist vorteilhaft für den OT-Anwender, da er unter eigener Kontrolle eine Provisionierung seiner Automatisierungsgeräte ID realisieren kann. Eine solche Lösung ist jedoch auch vorteilhaft für den Mobilfunkprovider MOB1, MOB2, MOB3, MOB4, da er sich mit einem solchen Dienst gegenüber Wettbewerbern differenzieren kann und dessen Nutzung durch OT-Anwender auch eine zusätzliche Einnahmequelle bilden kann.

Die Funktionalität des Teilnehmeridentifikationsmoduls TM kann durch eine USIM-Applikation selbst realisiert sein oder durch eine separate Provisioning-Applikation, die auf der gleichen UICC wie eine USIM oder eine GSMA eSIM-Management-Applikation vorliegt. Allgemein können auch mehrere USIMs oder mehrerer UICCs vorliegen, etwa als wechselbare UICC, zweckmäßig als rUICC, als eingebettet UICC, d. h. als eUICC, oder als integrierte UICC, d. h. als iUICC, vorliegen können. Ebenso kann statt einer UICC eine Smart Secure Platform (SSP), die rückwärtskompatible Nachfolgerin einer UICC, verwendet werden. In weiteren, nicht eigens dargestellten Ausführungsbeispielen können grundsätzlich auch mehrere Teilnehmeridentifikationsmodule TM vorliegen, die technisch auf unterschiedliche Art realisiert sein können. So können einige Teilnehmeridentifikationsmodule TM fest im Mobilfunkmodul UE integriert oder wechselbar vorgesehen sein oder als dediziertes Secure Element realisiert oder virtualisiert vorliegen. Es ist dabei auch möglich, dass das für die Erfindung verwendete Teilnehmeridentifikationsmodul TM ein anderes ist als das, das für den Zugang zum Mobilfunknetzwerk MOB1, MOB2, MOB3, MOB4 verwendet wird. Beispielsweise kann auch der Anbieter des Mobilfunkmoduls UE oder eines Routers des Mobilfunknetzwerks MOB1, MOB2, MOB3, MOB4 ein solches Teilnehmeridentifikationsmodul TM realisieren, das von ihm selbst herausgegeben wird und remote konfigurierbar ist.

## Patentansprüche

1. Vorrichtung mit einem Mobilfunkmodul (UE) und einem zur Nutzung eines Mobilfunknetzwerks mittels des Mobilfunkmoduls (EU) eingerichteten, insbesondere mit dem Mobilfunkmodul verbundenen, IoT-Gerät (ID), bei welcher eine Berechtigung des IoT-Geräts zur Nutzung des Mobilfunkmoduls (UE) durch das IoT-Gerät abhängig von einer das IoT-Gerät (ID) identifizierenden Identifizierungsinformation eingerichtet ist.

2. Vorrichtung nach dem vorhergehenden Anspruch, bei welcher die Vorrichtung einstückig und/oder einteilig ausgebildet, insbesondere einstückig und/oder einteilig handhabbar ausgebildet, ist.

3. Vorrichtung nach einem der vorhergehenden Ansprüche, bei welcher die Identifizierungsinformation eine Identitätskennung des IoT-Geräts (ID) ist oder aufweist.

4. Vorrichtung nach einem der vorhergehenden Ansprüche, bei welcher das IoT-Gerät (ID) und/oder ein Teilnehmeridentifikationsmodul (eSI) des Mobilfunkmoduls (UE) und/oder das Mobilfunkmodul (UE) zur Prüfung der Berechtigung zur Nutzung des Mobilfunkmoduls (UE) abhängig von der Identifizierungsinformation eingerichtet ist.

5. Vorrichtung nach einem der vorhergehenden Ansprüche, welche zur Beschränkung der Berechtigung zur Nutzung des Mobilfunkmoduls (UE) und/oder eines Teilnehmeridentifikationsmoduls (eSI) des Mobilfunkmoduls (UE) abhängig von einer von dem IoT-Gerät (ID) abhängigen oder ausgehenden Beschränkungsinformation eingerichtet ist.

6. Vorrichtung nach einem der vorhergehenden Ansprüche, bei welcher die Beschränkungsinformation eine Sperrinformation ist, mittels welcher die Berechtigung zur Nutzung aussetzbar und/oder unterbrechbar und/oder sperrbar ist.

7. Vorrichtung nach einem der vorhergehenden Ansprüche, bei welcher die Berechtigung zur Nutzung eine Berechtigung zur Änderung und/oder Löschung eines Netzzugangsprofils umfasst.

8. Vorrichtung nach einem der vorhergehenden Ansprüche, bei welcher das IoT-Gerät Änderungsvorgaben zur Änderung von Netzwerkzugangsprofilen für den Zugang zum Mobilfunk vorhält und eine Änderung der Netzwerkzugangsprofile mittels des IoT-Geräts und/oder eines Mobilfunknetzbetreibers entsprechend der Änderungsvorgaben initiierbar ist.

9. Vorrichtung nach einem der vorhergehenden Ansprüche, bei welcher das Teilnehmeridentifikationsmodul (eSI) eine Schnittstelle zum Empfang einer Netzwerkberechtigungsinformation zum Zugriff auf ein industrielles IoT-Netzwerk (NET) aufweist, wobei das Teilnehmeridentifikationsmodul (eSI) zur Übermittlung der Netzwerkberechtigungsinformation an das IoT-Gerät (ID) ausgebildet und eingerichtet ist.

10. Vorrichtung nach einem der vorhergehenden Ansprüche, bei welcher die Schnittstelle zum Empfang der Netzwerkberechtigungsinformation zusätzlich zu einer Schnittstelle zur Kommunikation mittels Mobilfunks hinzutritt.

11. Vorrichtung nach einem der vorhergehenden Ansprüche, bei welcher die Schnittstelle zum Empfang der Netzwerkberechtigungsinformation von einem Mobilfunkprovider, welcher das Teilnehmeridentifikationsmodul herausgibt, eingerichtet und ausgebildet ist.

12. Verfahren zum Betrieb einer Vorrichtung mit einem Mobilfunkmodul (UE) und einem IoT-Gerät (ID) zur Konfiguration einer Mobilfunkfähigkeit des IoT-Geräts (ID), bei welchem eine Berechtigung zur Nutzung eines Teilnehmeridentifikationsmoduls (eSI) des Mobilfunkmoduls (UE) und/oder eine Berechtigung zur Nutzung des Mobilfunkmoduls (UE) durch das IoT-Gerät (ID)abhängig von einer das IoT-Gerät (ID) identifizierenden Identifizierungsinformation eingerichtet wird.

13. Verfahren nach einem der vorhergehenden Ansprüche, bei welchem die Berechtigung zur Nutzung des Teilnehmeridentifikationsmoduls (eSI) eine Berechtigung zum Netzzugang mittels des Teilnehmeridentifkationsmoduls (eSI) ist und/oder eine solche Berechtigung umfasst.

14. Verfahren nach einem der vorhergehenden Ansprüche, bei welchem die Identifizierungsinformation eine Identitätskennung des IoT-Geräts (eSI) umfasst.

15. Verfahren nach einem der Ansprüche 10 bis 13, welches zum Betrieb einer Vorrichtung nach einem der Ansprüche 1 bis 11 durchgeführt wird.
